# FASCICULE DE BREVET EUROPEEN

(11) **EP 3 474 037 B1**
(45) Date de publication et mention de la délivrance du brevet: **06.04.2022**
(21) Numéro de dépôt: 18198297.6
(22) Date de dépôt: 02.10.2018
(51) Int. Cl.: G01S 13/90, G01S 13/86, G01S 13/87, G01S 19/51, G01S 17/08

(54) **DISPOSITIF D'IMAGERIE RECONFIGURABLE**
REKONFIGURIERBARE BILDGEBUNGSVORRICHTUNG
RECONFIGURABLE IMAGING DEVICE

(30) Priorité: 19.10.2017 FR 1701088
(43) Date de publication de la demande: 24.04.2019
(73) Titulaire: Thales, 92400 Courbevoie (FR)
(72) Inventeur: FORMONT, Stéphane, 78852 ELANCOURT (FR); GARREC, Patrick, 33700 MERIGNAC (FR); MONTIGNY, Richard, 33700 MERIGNAC (FR)
(74) Mandataire: Marks & Clerk France

(56) Documents cités:
- WO-A1-2017/048339
- US-A1- 2008 081 556
- US-A1- 2012 226 470
- US-A1- 2014 241 239
- US-A1- 2016 259 044
- GERHARD KRIEGER ET AL: "Interferometric Synthetic Aperture Radar (SAR) Missions Employing Formation Flying", PROCEEDINGS OF THE IEEE, IEEE. NEW YORK, US, vol. 98, no. 5, 1 May 2010 (2010-05-01), pages 816-843, XP011304886, ISSN: 0018-9219
- KRIEGER G ET AL: "Spaceborne bi- and multistatic SAR: potential and challenges", IEE PROCEEDINGS: RADAR, SONAR & NAVIGATION, INSTITUTION OF ELECTRICAL ENGINEERS, GB, vol. 153, no. 3, 15 June 2006 (2006-06-15) , pages 184-198, XP006026619, ISSN: 1350-2395

## Description

La présente invention concerne un dispositif d'imagerie reconfigurable.

Le domaine s'applique notamment pour réaliser des images de scènes. Ces images peuvent être des images optiques et/ou des images électromagnétiques. Les images sont acquises au moyen de plusieurs capteurs élémentaires mis en réseau, comme c'est le cas par exemple d'une antenne à balayage électronique pour les images électromagnétiques, ou d'un réseau de caméra pour les images optiques.

Un problème à résoudre concerne la possibilité de réorganiser dynamiquement un système d'imagerie, en modifiant les positions des antennes élémentaires entre elles pour une antenne à balayage électronique, ou la position de différentes caméras entre elles, de manière dynamique, en fonction du type d'images à acquérir afin d'ajuster la résolution aux objets que l'on cherche à imager.

La mise en réseau de capteurs élémentaires est connue. Les antennes à balayage électronique fonctionnent sur ce principe et sont utilisées dans le domaine des télécommunications et des radars. Une antenne à balayage électronique est ainsi généralement une antenne réseau dont les éléments rayonnants sont organisés selon une géométrie périodique permettant de travailler dans une gamme de fréquence bien particulière. L'espacement entre éléments rayonnants est figé par construction et ne peut donc être modifié.

Pour les capteurs d'imagerie optique organisés en réseau pour l'acquisition d'images de grande taille, le constat est identique. Le réseau de capteurs est généralement figé par construction.

Ces systèmes d'imagerie radar ou optique ne permettent pas de répondre au problème.

Un document WO 2017/048339 A1 divulgue un système de télédétection de la terre depuis l'espace.

Un document US 2012/226470 A1 divulgue un procédé de localisation tridimensionnelle de zone terrestre cible par fusionv d'images prises par deux capteurs satellitaires.

Un document US 2014/241239 A1 divulgue un système de communication basé sur des antennes intelligentes.

Un document US 2016/259044 A1 divulgue un système de positionnement selon les trois dimensions.

Un document US 2008/081556 A1 divulgue un procédé d'observation d'un satellite à l'aide d'un satellite en orbite rétrograde.

Un document G.KRIEGER et al : « Interferometric Synthetic Aperture Radar (SAR) Missions Employing Formation Flying », PROCEEDINGS OF THE IEEE, IEEE. NEW YORT, US, vol. 9, no 5, 1 mai 2010, pages 816-843 et in document G.KRIEGER et al : « Spaceborne bi- and multistatic SAR : potential and challenges », IEEE PROCEEDINGS : RADAR, SONAR & NAVIGATION INSTITUTION OF ELECTRICAL ENGINEERS, GB, vol. 153, no 3, 15 juin 2006, pages 184-198, décrivent des systèmes

Un but de l'invention est notamment de permettre la réalisation d'un système d'imagerie reconfigurable s'adaptant aux différents types d'images à acquérir. A cet effet, l'invention a pour objet un dispositif d'imagerie destiné à réaliser des images de scènes, comportant au moins :
- un ensemble de capteurs élémentaires optiques et/ou électromagnétiques (1) montés sur des porteurs volants pilotables;
- des moyens de traitement (10) ;
- une liaison de communication entre chaque capteur élémentaire et lesdits moyens de traitement ;
- des moyens de commande configurés pour déterminer les positions relatives des différents capteurs et pour piloter le vol desdits porteurs de façon à constituer un réseau de capteurs (100, 200, 300),
où:
la forme dudit réseau est déterminée de manière dynamique en fonction de l'image d'une scène donnée à réaliser, ladite forme pouvant être modifiée dynamiquement pendant le vol desdits porteurs, et
lesdits moyens de traitement réalisent la fusion des signaux transmis par lesdits capteurs en vue de délivrer ladite image de ladite scène, lesdits signaux étant représentatifs de ladite scène.

Lesdits capteurs électromagnétiques sont par exemple des capteurs radar permettant de réaliser des images de type SAR.

Dans un mode de réalisation possible, chaque porteur est équipé au moins d'un capteur. Chaque porteur est par exemple équipé d'un capteur optique et d'un capteur électromagnétique.

Les porteurs peuvent être des drones ou des ballons par exemple.

Dans un mode de réalisation possible, lesdits moyens de traitement sont installés sur un seul desdits porteurs.

Dans un autre mode de réalisation possible, lesdits moyens de traitement sont partagés sur plusieurs desdits porteurs.

Dans un autre mode de réalisation possible, lesdits moyens de traitement sont installés dans une station au sol, fixe ou mobile.

Lesdits moyens de commande comportent par exemple des systèmes de type GPS pour mesurer les positions relatives des capteurs entre eux.

Lesdits moyens de commande comportent par exemple des moyens de mesure de distances aux capteurs par émission d'un faisceau laser vers les différents capteurs, les positions relatives entre les capteurs étant déduites de ces distances. Avantageusement, le faisceau laser est par exemple utilisé comme ligne de communication entre lesdits moyens de commande et lesdits capteurs.

Dans un mode de réalisation possible, lesdits capteurs électromagnétiques étant des capteurs radar, ils sont positionnés en vol à une distance les uns des autres sensiblement égale à la demi-longueur d'onde radar.

D'autres caractéristiques et avantages de l'invention apparaîtront à l'aide de la description qui suit, faite en regard de dessins annexés qui représentent :
- La figure 1, une illustration du principe de réalisation d'un dispositif selon l'invention, ledit dispositif étant présenté dans une configuration de réseau de capteur particulière ;
- La figure 2, une autre configuration possible du réseau de capteurs, disposés selon une ligne ;
- La figure 3, une autre configuration possible du réseau de capteurs, disposés en coin.

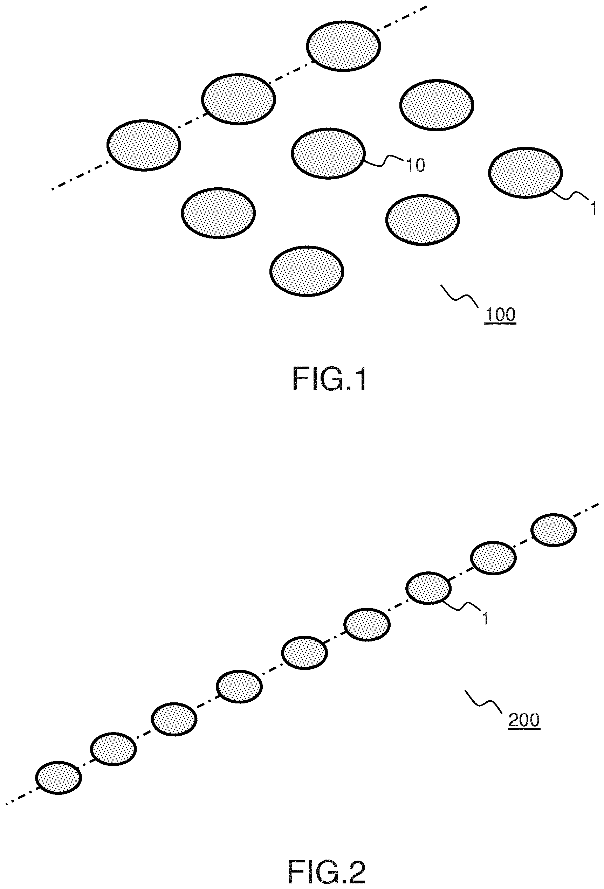

La figure 1 illustre le principe de réalisation d'un dispositif selon l'invention. La solution proposée par un dispositif selon l'invention est basée sur un ensemble de capteurs élémentaires optiques et/ou des capteurs électromagnétiques 1 (capteurs RF). Ces capteurs volent dans l'espace en formant un réseau 100, au moyen de porteurs ou plateformes mobiles sur lesquels ils sont installés.

La position des capteurs élémentaires les uns par rapport aux autres définit les performances du dispositif complet. La modification des positions des capteurs permet de modifier les performances du dispositif en conséquence. Avantageusement, ces performances peuvent être adaptées dynamiquement à la scène dont il faut acquérir une image, et aux objets recherchés, comme cela sera plus particulièrement décrit par la suite.

Les porteurs sur lesquels sont installés les capteurs sont par exemple des drones. La figure 1 présente, à titre d'exemple, un ensemble de drones volant en essaim et portant chacun un capteur 1 d'imagerie optique ou électromagnétique.

Les capteurs électromagnétiques comportent par exemple des antennes simples ou multiples opérant sur une ou plusieurs bandes de fréquences, ou des réseaux d'antennes.

En réorganisant les positions relatives des drones les uns par rapport aux autres, il possible de modifier dynamiquement les propriétés des réseaux de capteurs 1, et donc de modifier certains paramètres tels que la résolution spatiale ou angulaire.

Les signaux acquis les différents capteurs sont recombinés afin de former une image de résolution améliorée selon les méthodes connues de l'homme de l'art. A cet effet, des moyens de traitement reçoivent les signaux acquis par tous les capteurs 1, ces moyens de traitement recombinant ces signaux pour former l'image améliorée. Dans le cas où l'essaim comporte à la fois des capteurs optiques et des capteurs électromagnétiques, les moyens de traitement fusionnent les signaux optiques et les signaux radar, l'image obtenue est alors le résultat de la superposition d'une image optique et d'une image RF. La construction de l'image par les moyens de traitements nécessite également de connaître les positions relatives des drones. Différentes solutions de mesure de ces positions seront décrites par la suite.

Plusieurs variantes de réalisation permettent de mettre en œuvre cette solution, tant au niveau des porteurs (les drones par exemple) qu'au niveau du support des moyens de traitement.

En ce qui concerne les capteurs, ceux-ci peuvent être équipés de moyens d'émission de signaux vers les moyens de traitement, ces moyens d'émission peuvent être intégrés dans les capteurs ou installés sur le porteur de chaque capteur, le drone en l'occurrence. Ces moyens d'émission peuvent complétés par des moyens de réception, notamment pour recevoir les signaux de commande des porteurs, plus particulièrement pour contrôler leurs positions relatives. Plus généralement, chaque drone comporte une liaison de communication, intégrée ou non aux capteurs, communiquant avec une plateforme intégrant les moyens de traitement de l'image et des moyens de commande à distance des drones. Ces derniers moyens commandent le vol des porteurs et permettent d'obtenir les différentes formes que l'on souhaite adapter à la scène.

Les capteurs utilisés peuvent être des capteurs bas coût. On peut par exemple utiliser des capteurs 25 GHz disponibles dans le commerce. Ces capteurs peuvent même intégrer un circuit d'émission et de réception assurant la liaison avec les moyens de traitement. Ces capteurs intègrent également un convertisseur analogique-numérique (CAN) de telle sorte que le signal transmis au traitement est déjà numérisé.

En ce qui concerne les moyens de traitement, d'image et/ou de contrôle, ceux-ci peuvent être installés sur un des drones 10, sur un support aéroporté différent d'un porteur ou encore dans une station au sol, fixe ou mobile. En d'autres termes, la plateforme évoquée ci-dessus peut être un des drones porteurs, un autre aéronef, ou une station au sol fixe ou mobile. Dans une variante de réalisation, au lieu de prévoir l'installation des moyens de traitement sur un seul drone, les moyens de traitement sont partagés sur plusieurs drones, plus précisément ils sont répartis sur plusieurs drones.

Pour reconfigurer dynamiquement le réseau de capteurs 1 et contrôler leurs positions relatives, il faut être en mesure de connaître ces positions c'est-à-dire finalement la position de leurs porteurs.

Dans un mode de réalisation particulier, afin de connaître précisément les positions relatives des drones entre eux, chaque drone embarque des moyens de localisation qui permet de le référencer par rapport à ses voisins. Ces moyens sont par exemple des systèmes de type GPS, ou des systèmes de télémétrie optique permettant une mesure précise des distances entre drones.

Des solutions qui permettent de mesurer des distances sont par exemple :
- des mesures par temps de vol, la précision étant de l'ordre du centimètre ;
- des mesures hétérodynes optiques, la précision pouvant atteindre une centaine de microns sur des distances allant jusqu'à 20 mètres (voir par exemple l'article « Laser ranging : a critical review of usual techniques for distance measurement, Markus-Christian Amann, Thierry Bosch, Marc Lescure, Risto Myllyla, Marc Rioux, in Opt. Eng. 40(1) 10-19 (January 2001) »). Le principe consiste à utiliser une source laser dont la fréquence d'oscillation est ajustée à la distance à mesurer.
- des mesures de type radar FMCW optique, par opposition à un FMCW électromagnétique dont la résolution est moindre. En optique l'intérêt repose sur la possibilité de réaliser des balayages de fréquences plus importants qu'en RF, et donc, d'avoir accès à des résolutions sub-centimétriques.

Ces principes de mesure s'appliquent avantageusement pour la configuration de réseau de la figure 1 adaptée à une imagerie 2D.

Ils sont également applicables en 3D, où les drones sont disposés selon un réseau en trois dimensions. Cela permet, en plus de l'accès à la distance, d'avoir accès à l'attitude des différents drones entre eux, ou d'améliorer la précision des mesures.

La localisation des différents aéronefs entre eux permet d'ajuster les faisceaux formés en fonction de la fréquence de travail, et de déterminer les ambigüités associées au fait que les antennes ne soient pas espacées d'une fraction de la longueur d'onde mais de plusieurs longueurs d'onde.

Les mesures de distances entre drones peuvent également être faites en utilisant des lasers pour permettre des mesures de stéréoscopie. Plus précisément dans ce cas les moyens de commande comportent des moyens de mesure de distances aux drones par émission d'un faisceau laser vers les différents drones. A partir de ces distances mesurées, on peut en déduire les positions relatives entre les drones.

Avantageusement, ces lasers peuvent par ailleurs servir comme liaison de communication entre les drones et les moyens de traitement.

Une autre solution encore consiste à utiliser des méthodes de transmission à bande de fréquences ultra large pour effectuer des mesures précises. Ces méthodes permettent de faire re-circuler l'information et d'améliorer les mesures de distance.

Il est aussi possible d'utiliser la solution développée dans la demande de brevet FR1700340 pour générer des taches de lumière de référence et permettre une géo localisation relative des drones.

Les moyens de mesures décrits précédemment sont intégrés dans les moyens de commande du vol des drones. A partir des mesures de distances ou de positions relatives, les moyens de commande pilotent les drones à distance pour modifier ou maintenir la forme du réseau volant. Ils commandent également la vitesse des drones, en fonction notamment de l'image à acquérir.

Connaissant les positions relatives des caméras et les angles de vue, il est possible de reconstituer des scènes 3D. En effet, chaque capteur voie une projection de la scène et la connaissance des positions relatives des drones permet de reconstruire l'image.

Dans le domaine radar, les capteurs peuvent être des capteurs radar de type SAR (Synthetic Aperture Radar), plus particulièrement des radars permettant de réaliser des images de type SAR. Les méthodes de construction de l'image améliorée sont identiques.

Le nombre de drones formant l'essaim présenté à la figure 1 peut être important. Plus le nombre de drones est important, plus l'image obtenue est précise. Les drones utilisés peuvent être des drones à bas coût, ce qui permet d'utiliser beaucoup de drones. En pratique, l'essaim comporte au moins quatre drones par exemple. Dans l'exemple de la figure 1, le dispositif comporte neuf drones.

Dans le cas où l'imagerie est à la fois optique et électromagnétique, c'est-à-dire où l'essaim comporte des capteurs optiques et des capteurs électromagnétiques, deux modes de réalisation sont possibles. Dans un premier mode de réalisation, chaque drone porte à la fois un capteur optique et un capteur électromagnétique. Dans un autre mode de réalisation, chaque porteur porte un seul capteur, optique ou électromagnétique. Dans ce cas, on peut former un réseau optique et un réseau électromagnétique, les deux réseaux étant enchevêtrés. Cela est par exemple réalisant en alternant capteur optique et capteur électromagnétique le long de chaque ligne ou colonne du réseau.

La figure 2 présente une autre configuration possible du réseau de capteurs 200. Dans ce cas, les capteurs sont arrangés selon une ligne, notamment pour une imagerie 1D. Dans cette configuration, les capteurs sont régulièrement répartis le long de la ligne.

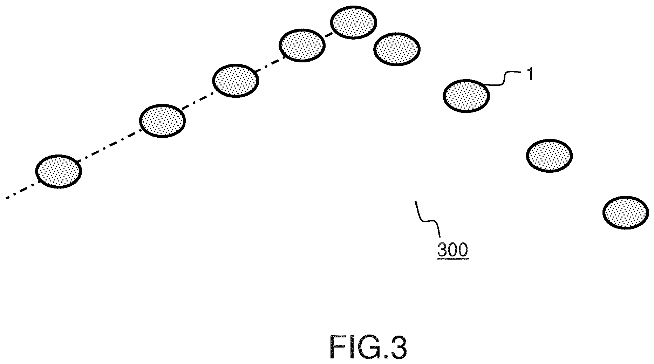

La figure 3 présente un exemple de configuration, ou de réseau 300, où les capteurs sont arrangés en coin, selon deux lignes, et où les capteurs ne sont pas régulièrement répartis sur les lignes, notamment pour effectuer des mesures de direction d'arrivée.

Un même dispositif selon l'invention peut passer d'une configuration selon la figure 1, à une configuration selon la figure 2 ou la figure 3 et vice-versa. Avantageusement, un dispositif selon l'invention peut prendre toutes sortes de configuration au cours d'une même mission.

Il est possible de réaliser un dispositif selon l'invention fonctionnant dans toutes les bandes de fréquences opérationnelles, notamment les bandes HF V/UHF X, Ku, K, Ka et millimétriques.

Il est aussi possible d'utiliser des bands V/UHF et d'installer des antennes de type yagi sur les drones. Dans ce cas la création d'une antenne basse fréquence est possible avec les avantages consistants à avoir une antenne mobile, orientable dans les directions désirées.

Pour les solutions en bande basse, il est possible de positionner les drones à des distances de l'ordre de la demi-longueur d'onde radar et ainsi mettre en réseau les antennes. Les détections d'objets de très faible surface équivalente radar peuvent ainsi être avantageusement effectuées.

Il est également possible d'utiliser plusieurs bandes de fréquences en même temps et de corréler les informations.

Un dispositif d'imagerie selon l'invention comporte beaucoup d'avantages. En particulier, l'invention offre :
- La possibilité de réorganiser dynamiquement les caractéristiques des réseaux de capteurs d'imagerie ;
- La possibilité de modifier les performances afin de focaliser l'image sur un point particulier, ou d'acquérir des images de grandes scènes ;
- La possibilité de réaliser toutes formes de réseau particulières (damier 2D, 3D, ligne, croix, coin ...) ;
- Une grande robustesse, en particulier si un capteur est hors service, il est possible de reconfigurer le réseau pour annuler l'effet de son état hors service ;
- Une économie de réalisation, en effet le coût d'un drone élémentaire est faible, et il est possible de réaliser des réseaux de grande taille.

Dans les exemples de réalisation de l'invention décrits, les porteurs sont des drones. Il est bien sûr possible d'utiliser d'autres porteurs dès lors que l'on peut créer un réseau de capteurs volants, optiques et/ou électromagnétiques, dont on peut adapter les positions relatives en vol. Il est ainsi possible d'utiliser des ballons.

## Revendications

1. Dispositif d'imagerie destiné à réaliser des images de scènes, ledit dispositif comportant au moins :
- un ensemble de capteurs élémentaires optiques et/ou électromagnétiques (1) montés sur des porteurs volants pilotables;
- des moyens de traitement (10) ;
- une liaison de communication entre chaque capteur élémentaire et lesdits moyens de traitement ;
- des moyens de commande configurés pour déterminer les positions relatives des différents capteurs et pour piloter le vol desdits porteurs de façon à constituer un réseau de capteurs (100, 200, 300), où :
la forme dudit réseau est déterminée de manière dynamique en fonction de l'image d'une scène donnée à réaliser, ladite forme pouvant être modifiée dynamiquement pendant le vol desdits porteurs, et
lesdits moyens de traitement réalisent la fusion des signaux transmis par lesdits capteurs en vue de délivrer ladite image de ladite scène, lesdits signaux étant représentatifs de ladite scène.

2. Dispositif selon la revendication 1, **caractérisé en ce que** lesdits capteurs électromagnétiques sont des capteurs radar permettant de réaliser des images de type SAR.

3. Dispositif selon l'une quelconque des revendications précédentes, **caractérisé en ce que** chaque porteur est équipé d'au moins un capteur.

4. Dispositif selon la revendication 3, **caractérisé en ce que** chaque porteur est équipé d'un capteur optique et d'un capteur électromagnétique.

5. Dispositif selon l'une quelconque des revendications 1 à 4, **caractérisé en ce que** les porteurs sont des drones.

6. Dispositif selon l'une quelconque des revendications 1 à 4, **caractérisé en ce que** les porteurs sont des ballons.

7. Dispositif selon l'une quelconque des revendications 1 à 6, **caractérisé en ce que** lesdits moyens de traitement sont installés sur un seul desdits porteurs (10).

8. Dispositif selon l'une quelconque des revendications 1 à 6, **caractérisé en ce que** lesdits moyens de traitement sont partagés sur plusieurs desdits porteurs.

9. Dispositif selon l'une quelconque des revendications 1 à 6, **caractérisé en ce que** lesdits moyens de traitement sont installés dans une station au sol, fixe ou mobile.

10. Dispositif selon l'une quelconque des revendications précédentes, **caractérisé en ce que** lesdits moyens de commande comportent des systèmes de type GPS pour mesurer les positions relatives des capteurs entre eux.

11. Dispositif selon l'une quelconque des revendications 1 à 9, **caractérisé en ce que** lesdits moyens de commande comportent des moyens de mesure des distances aux capteurs par émission d'un faisceau laser vers les différents capteurs, les positions relatives entre les capteurs étant déduites de ces distances.

12. Dispositif selon la revendication 11, **caractérisé en ce que** ledit faisceau laser est utilisé comme ligne de communication entre lesdits moyens de commande et lesdits capteurs.

13. Dispositif selon l'une quelconque des revendications précédentes, **caractérisé en ce que** lesdits capteurs électromagnétiques étant des capteurs radar, ils sont positionnés en vol à une distance les uns des autres sensiblement égale à la demi-longueur d'onde radar.

## Patentansprüche

1. Bildgebungsvorrichtung, dazu bestimmt, Bilder von Szenen zu herzustellen, wobei die Vorrichtung mindestens Folgendes umfasst:
- eine Gruppe optischer und/oder elektromagnetischer Elementarsensoren (1), welche an mehreren steuerbaren, fliegenden Trägern montiert ist;
- Verarbeitungsmittel (10);
- eine Kommunikationsverbindung zwischen jedem Elementarsensor und den Verarbeitungsmitteln;
- Steuerungsmittel, welche konfiguriert sind, um die relativen Positionen der unterschiedlichen Sensoren zu bestimmen und um den Flug der Träger dergestalt zu steuern, dass ein Sensornetzwerk (100, 200, 300) gebildet wird, wobei:
die Form des Netzwerks dynamisch angesichts des herzustellenden Bildes einer gegebenen Szene bestimmt wird, wobei die Form dynamisch während des Flugs der Träger verändert werden kann, und
die Verarbeitungsmittel die Fusion der durch die Sensoren übertragenen Signale zum Abgeben des Bildes der Szene durchführen, wobei die Signale die Szene darstellen.

2. Vorrichtung nach Anspruch 1, **dadurch gekennzeichnet, dass** die elektromagnetischen Sensoren Radarsensoren sind, welche die Herstellung von Bildern vom Typ SAR ermöglichen.

3. Vorrichtung nach einem der vorhergehenden Ansprüche, **dadurch gekennzeichnet, dass** jeder Träger mit mindestens einem Sensor ausgerüstet ist.

4. Vorrichtung nach Anspruch 3, **dadurch gekennzeichnet, dass** jeder Träger mit einem optischen Sensor und einem elektromagnetischen Sensor ausgerüstet ist.

5. Vorrichtung nach einem der Ansprüche 1 bis 4, **dadurch gekennzeichnet, dass** die Träger Drohnen sind.

6. Vorrichtung nach einem der Ansprüche 1 bis 4, **dadurch gekennzeichnet, dass** die Träger Ballons sind.

7. Vorrichtung nach einem der Ansprüche 1 bis 6, **dadurch gekennzeichnet, dass** die Verarbeitungsmittel auf nur einem der Träger (10) installiert sind.

8. Vorrichtung nach einem der Ansprüche 1 bis 6, **dadurch gekennzeichnet, dass** die Verarbeitungsmittel über mehrere der Träger geteilt sind.

9. Vorrichtung nach einem der Ansprüche 1 bis 6, **dadurch gekennzeichnet, dass** die Verarbeitungsmittel in einer Station am Boden installiert sind, welche fest oder mobil ist.

10. Vorrichtung nach einem der vorhergehenden Ansprüche, **dadurch gekennzeichnet, dass** die Steuerungsmittel Systeme vom Typ GPS zum Messen der relativen gegenseitigen Positionen der Sensoren umfassen.

11. Vorrichtung nach einem der Ansprüche 1 bis 9, **dadurch gekennzeichnet, dass** die Steuerungsmittel Mittel zum Messen der Abstände zu den Sensoren durch Aussenden eines Laserstrahls an die unterschiedlichen Sensoren umfassen, wobei die relativen Positionen zwischen den Sensoren aus diesen Abständen abgeleitet werden.

12. Vorrichtung nach Anspruch 11, **dadurch gekennzeichnet, dass** der Laserstrahl als Kommunikationsleitung zwischen den Steuerungsmitteln und den Sensoren verwendet werden.

13. Vorrichtung nach einem der vorhergehenden Ansprüche, **dadurch gekennzeichnet, dass**, da die elektromagnetischen Sensoren Radarsensoren sind, sie im Flug in einem Abstand voneinander positioniert sind, welcher im Wesentlichen einer halben Radarwellenlänge entspricht.

## Claims

1. An imaging device for producing images of scenes, said device including at least:
- a set of optical and/or electromagnetic elementary sensors (1) which are mounted on flying controllable carriers;
- processing means (10);
- a communication link between each elementary sensor and said processing means;
- command means configured to determine the relative positions of the various sensors and to pilot the flight of said carriers so as to form an array of sensors (100, 200, 300),
where:
the configuration of said array is determined dynamically as a function of an image of a given scene to be produced, said configuration being able to be dynamically modified during the flight of said carriers, and
said processing means fusing the signals transmitted by said sensors in order to deliver said image of said scene, said signals being representative of said scene.

2. The device according to claim 1, **characterised in that** said electromagnetic sensors are radar sensors enabling to produce images of SAR type.

3. The device according to any one of the preceding claims, **characterised in that** each carrier is equipped with at least a sensor.

4. The device according to claim 3, **characterised in that** each carrier is equipped with an optical sensor and with an electromagnetic sensor.

5. The device according to any one of claims 1 to 4, **characterised in that** the carriers are drones.

6. The device according to any one of claims 1 to 4, **characterised in that** the carriers are balloons.

7. The device according to any one of claims 1 to 6, **characterised in that** said processing means are installed on a single of said carriers (10).

8. The device according to any one of claims 1 to 6, **characterised in that** said processing means are shared over several of the said carriers.

9. The device according to any one of claims 1 to 6, **characterised in that** said processing means are installed in a fixed or mobile ground station.

10. The device according to any one of the preceding claims, **characterised in that** said command means have GPS type systems for measuring the mutual relative positions of the sensors.

11. The device according to any one of claims 1 to 9, **characterised in that** said command means have means for measuring the distances to the sensors by emission of a laser beam towards the various sensors, the relative positions between the sensors being deduced from these distances.

12. The device according to claim 11, **characterised in that** said laser beam is used as a communication line between said command means and said sensors.

13. The device according to any one of the preceding claims, **characterised in that** the said electromagnetic sensors being radar sensors, they are positioned in flight at a distance apart substantially equal to half the wavelength of the radar.
